# EUROPÄISCHE PATENTSCHRIFT

(11) **EP 3 459 797 B1**
(45) Veröffentlichungstag und Bekanntmachung des Hinweises auf die Patenterteilung: **06.11.2019**
(21) Anmeldenummer: 18204773.8
(22) Anmeldetag: 21.09.2016
(51) Int. Cl.: B60R 22/40, B60R 22/405

(54) **FAHRZEUGSENSITIVER SENSOR MIT MEHRTEILIGER SENSORMASSE**
VEHICLE-SENSITIVE SENSOR WITH MULTI-PART SENSOR MASS
CAPTEUR SENSIBLE DE VÉHICULE COMPORTANT UNE MASSE DE CAPTEUR À PLUSIEURS PARTIES

(30) Priorität: 24.09.2015 DE 102015116136
(43) Veröffentlichungstag der Anmeldung: 27.03.2019
(62) Teilanmeldung aus: 16787733.1
(73) Patentinhaber: Autoliv Development AB, 447 83 Vårgårda (SE)
(72) Erfinder: Jabusch, Ronald, 25336 Elmshorn (DE); Evers, Uwe, 25348 Glückstadt (DE); Deshpande, Aniruddha, 22525 Hamburg (DE)
(74) Vertreter: Feucker, Max Martin

(56) Entgegenhaltungen:
- EP-A2- 0 795 447
- DE-A1- 19 539 619
- DE-A1-102004 016 501
- DE-A1-102011 086 656
- DE-U1- 8 009 960

## Beschreibung

Die vorliegende Erfindung betrifft einen fahrzeugsensitiven Sensor für einen selbstsperrenden Gurtaufroller, umfassend ein Trägerteil, einen eine Eingriffsspitze aufweisenden Sperrhebel und eine mit dem Sperrhebel gekoppelte, auf einer Aufstandfläche des Trägerteils stehend angeordnete und zu dem Trägerteil kippbare Sensormasse.

Ein Sensor mit den vorgenannten Merkmalen ist aus DE 195 39 619 C2 bekannt. Ein solcher Sensor wird in einem Blockiersystem für eine Gurtaufwickelwelle eines selbstsperrenden Gurtaufrollers eingesetzt, wobei im Auslösefall die fahrzeugsensitiv gelagerte Sensormasse den Sperrhebel mit seiner Eingriffsspitze in Eingriff mit einer Verzahnung einer Steuerscheibe bewegt, so dass die Steuerscheibe in ihrer gemeinsamen Drehbewegung mit der Gurtaufwickelwelle angehalten und dadurch das Blockiersystem aktiviert wird. Es hat sich nun herausgestellt, dass der fahrzeugsensitive Sensor während der Bewegung eines Kraftfahrzeuges ungewollte Geräusche erzeugt. Soweit in DE 195 39 619 C2 vorgeschlagen ist, dass einzelne Funktionsteile des Sensors aus weichen gummiartigen oder kunststoffartigen Werkstoffen zu fertigen sind, ist hieran nachteilig, dass eine so ausgebildete Sensormasse relativ aufwändige und große Geometrien erfordert, um bei einer Fahrzeugbeschleunigung auf der Aufstandfläche zu kippen. Zudem hat sich herausgestellt, dass bei dem bekannten Sensor der Sperrhebel in Fallversuchen nicht sicher in dem Sensor verweilt. Auch kann es zu Verschmutzungen der Aufstandfläche kommen, die dazu führen, dass die Sensormasse in einer Richtung nicht kippen kann.

DE 27 36 025 A1, US 2008 / 0 029 635 A1 und DE 10 2009 052 495 A1 offenbaren ebenfalls jeweils fahrzeugsensitive Sensoren. Aus DE 10 2011 086 656 A1 ist zudem bekannt, dass ein das Trägerteil haltende Gehäuse aus einem weicheren Material besteht als das Trägerteil. Aus DE 80 09 960 U1 ist bekannt, das Trägerteil aus einem elastischen und schalldämpfenden Material zu fertigen.

Aufgabe der vorliegenden Erfindung ist es daher, die mit Bezug zum Stand der Technik geschilderten Probleme zumindest teilweise zu lösen und insbesondere einen fahrzeugsensitiven Sensor anzugeben, dessen Geräuschemission verringert ist, der nach Fallversuchen noch funktionsfähig ist und/oder der auch nach längerem Gebrauch in alle Richtungen sicher kippt.

Gelöst wird zumindest ein Aspekt dieser Aufgabe durch einen Sensor mit den Merkmalen des unabhängigen Anspruchs. Vorteilhafte Weiterbildungen des Sensors sind in den abhängigen Ansprüchen und in der Beschreibung angegeben, wobei einzelne Merkmale der vorteilhaften Weiterbildungen in technologisch sinnvoller Weise beliebig miteinander kombinierbar sind.

Gelöst wird zumindest ein Aspekt dieser Aufgabe durch einen fahrzeugsensitiven Sensor mit den eingangs genannten Merkmalen, bei dem die Sensormasse mit einem auskragenden Bereich eine äußere Kante der Aufstandfläche übergreift, so dass die Aufstandfläche auch radial von der Sensormasse überdeckt ist und somit gegen Verschmutzung geschützt ist. Somit wird verhindert, dass die Kippbewegung der Sensormasse verhindernder Schmutz auf die Aufstandfläche des Trägerteils gelangt. Die insbesondere ebene Aufstandfläche wird somit radial von einer Kante begrenzt, welche von dem auskragenden Bereich der Sensormasse übergriffen wird. In einer radialen Ansicht wäre somit die Kante der Aufstandfläche von dem auskragenden Bereich der Sensormasse abgedeckt.

Insbesondere besteht die Sensormasse aus einem auf der Aufstandfläche aufliegenden Sensorteil aus einem ersten Material und aus einem mit dem Sensorteil insbesondere formschlüssig verbundenen, oberhalb der Aufstandfläche angeordneten Masseteil aus einem zweiten Material, wobei das das Sensorteil bildende erste Material eine geringere Dichte und eine geringere Härte als das das Masseteil bildende zweite Material aufweist.

Es kann also vorgesehen sein, dass die Sensormasse aus verschiedenen Materialien besteht, wobei jene Bereiche der Sensormasse aus einem relativ weichen und leichten Material bestehen, die im Gebrauch mit dem Trägerteil insbesondere mit der Aufstandfläche des Trägerteils in Berührung kommen können. Da weicheres Material bei Berührung mit anderen Gegenständen Vibrationen absorbiert, können Schallemissionen verringert werden. Das über der Aufstandfläche angeordnete, eine höhere Dichte aufweisende Masseteil sorgt dafür, dass die Sensormasse bei Fahrzeugbeschleunigungen trotz relativ kleinem Volumen sicher auf der Aufstandfläche kippt. Die Sensormasse kann also bei Vermeidung von Geräuschemissionen ein relativ kleines Volumen aufweisen.

Der fahrzeugsensitive Sensor kann über das Trägerteil an einen selbstsperrenden Gurtaufroller angebracht werden. Das Trägerteil bildet eine insbesondere ebene Aufstandfläche aus, wobei die Aufstandfläche und der auf die Aufstandfläche aufzusetzende Teil der Sensormasse so ausgebildet sind, dass bei waagerechter Ausrichtung des Sensors die Sensormasse auf der Aufstandfläche steht und schon bei geringeren Beschleunigungen in eine beliebige Richtung auf der Aufstandfläche kippt. Die Sensormasse ist dabei so mit dem Sperrhebel gekoppelt, dass durch das Kippen der Sensormasse der Sperrhebel ausgelenkt wird und in Eingriff mit einer Steuerscheibe gebracht werden kann.

Bevorzugt ist das erste Material ein weicher Kunststoff und das zweite Material ein harter Kunststoff. Alternativ kann das zweite Material ein Metall sein. Insbesondere kann auch vorgesehen sein, dass die Sensormasse in einem Zweikomponentenspritzgussverfahren hergestellt wird. Alternativ kann vorgesehen sein, dass das Sensorteil und das Masseteil unabhängig voneinander hergestellt werden und hinterher miteinander verbunden werden. In diesem Fall ist das Sensorteil insbesondere formschlüssig mit dem Masseteil verbunden.

Um zu verhindern, dass sich der Sperrhebel bei Fallversuchen von dem Sensor löst, kann insbesondere auch unabhängig von der zuvor beschriebenen Lösung vorgesehen sein, dass der Sperrhebel durch die Sensormasse hindurchgreift und auf einer der Eingriffsspitze gegenüberliegenden Seite von einem Abschnitt des Trägerteils zumindest teilweise übergriffen wird, so dass die Sensormasse gegen Herausfallen gesichert ist. Der Sperrhebel steht also einerseits mit seiner der Eingriffsspitze aufweisenden Seite über die Sensormasse hinaus und andererseits mit seiner gegenüberliegenden Seite über die Sensormasse hinaus. In diesem der Eingriffsspitze gegenüberliegenden Teil ist das Trägerteil so ausgebildet, dass es den Sperrhebel in einer Querschnittsebene auf alle Seiten zumindest teilweise umgibt. Der Sperrhebel ist dabei allerdings in seiner Ruhestellung nicht in allen Bereichen in Anlage mit dem Trägerteil. Vielmehr ist ein Abstand zwischen dem Sperrhebel und dem übergreifenden Bereich des Trägerteils ausgebildet, so dass der Sperrhebel bei Kippen der Sensormasse ausschwenken kann. Der Abstand ist aber so bemessen, dass im Falle großer Auslenkungen des fahrzeugsensitiven Sensors der Sperrhebel an einem Herausfallen aus dem Sensor gehindert wird.

Insbesondere liegt der Sperrhebel zur Ausbildung einer Kippachse bevorzugt zwischen der Aufstandfläche des Trägerteils und der Eingriffsspitze des Sperrhebels auf dem Trägerteil auf, wobei das Trägerteil den Sperrhebel auch im Bereich dieser Auflage zumindest teilweise übergreift. Auch in diesem (Querschnitts-)Bereich ist ein Abstand zwischen dem übergreifenden Bereich des Trägerteils und dem Sperrhebel ausgebildet, so dass der Sperrhebel beim Kippen der Sensormasse ausgelenkt werden kann. Insbesondere wenn beiderseits der Sensormasse das Trägerteil den Sperrhebel übergreift, wird verhindert, dass der Sperrhebel von dem Sensor abhandenkommen kann.

Insbesondere ist auch vorgesehen, dass ein durch die Sensormasse durchgreifender Abschnitt des Sperrhebels auf seiner Oberseite und auf seiner Unterseite in Anlage mit der Sensormasse ist und in den Anlagebereichen kugelförmig gestaltet ist. Insbesondere durchgreift der Sperrhebel die Sensormasse oberhalb der Aufstandfläche. Durch eine solche Ausgestaltung wird erreicht, dass bei einem Kippen der Sensormasse auf der Aufstandfläche der Sperrhebel im Bereich der Anlage mit der Sensormasse angehoben wird, wodurch der Sperrhebel ausgeklenkt wird und mit seiner Eingriffsspitze in Eingriff mit der Steuerscheibe gebracht wird. Durch die kugelförmige Ausbildung der Anlagebereiche ist diese Auslenkung spielfrei möglich.

In diesem Zusammenhang kann insbesondere vorgesehen sein, dass der Sperrhebel mit seinem durchgreifenden Abschnitt zumindest abschnittsweise zwischen dem einteiligen Sensorteil und dem einteiligen Masseteil angeordnet ist. Dies ist insbesondere dann vorgesehen, wenn der Sperrhebel während der Montage durch formschlüssiges Verbinden des Masseteils mit dem Sensorteil an dem Sensor fixiert wird.

Zur formschlüssigen Festlegung des Masseteils an dem Sensorteil kann insbesondere vorgesehen sein, dass an dem Masseteil zumindest eine Aussparung ausgebildet ist, in die an dem Sensorteil ausgebildete Federarme mit Haken an ihren Enden eingreifen. Es kann somit eine einfache Rastverbindung zwischen Masseteil und Sensorteil bereitgestellt werden.

In einer weiteren Ausführungsform kann vorgesehen sein, dass der Sperrhebel das einteilige Sensorteil durch eine fensterartige Ausnahme in dem Sensorteil durchgreift und mit seiner Oberseite und seiner Unterseite in Anlage mit dem Sensorteil ist. Bei einer solchen Ausführungsform kann zunächst das Sensorteil und der Sperrhebel an dem Trägerteil montiert werden, während erst anschließend das Masseteil montiert werden kann.

Insbesondere bei einer solchen Ausgestaltung kann vorgesehen sein, dass das Masseteil eine insbesondere metallische Kugel ist, die in das Sensorteil eingerastet ist.

Um eine Kippbewegung der Sensormasse bei Fahrzeugbeschleunigung zu begrenzen, kann vorgesehen sein, dass das Sensorteil mit einem stiftförmigen Fortsatz in einer konisch zur Aufstandfläche zulaufenden Ausnehmung in dem Trägerteil angeordnet ist. Bei einer Kippbewegung der Sensormasse gelangt also der stiftförmige Fortsatz in Anlage mit der Umfangsfläche der Ausnehmung und begrenzt somit die Kippbewegung. Der stiftförmige Fortsatz kann insbesondere so dimensioniert sein, dass er nach Fortfall der Fahrzeugbeschleunigung dafür sorgt, dass die Sensormasse wieder in ihre Ruhelage gelangt.

Die eingangs genannten Merkmale werden auch gelöst durch einen selbstsperrenden Gurtaufroller mit einem einen erfindungsgemäßen Sensor umfassenden Blockiersystem für eine Gurtaufwickelrolle, wobei im Auslösefall die fahrzeugsensitiv gelagerte Sensormasse den Sperrhebel mit seiner Eingriffsspitze in Eingriff mit einer Verzahnung einer Steuerscheibe bewegt, so dass die Steuerscheibe in ihrer gemeinsamen Drehbewegung mit der Gurtaufwickelwelle angehalten und dadurch das Blockiersystem aktiviert wird.

Die Erfindung sowie das technische Umfeld werden im Folgenden anhand der Ausführungsbeispiele erläutert. Es zeigen schematisch
- Fig. 1:: eine erste Ausführungsform eines fahrzeugsensitiven Sensors,
- Fig. 2:: eine Explosionsansicht des Sensors,
- Fig. 3:: eine Schnittansicht durch den Sensor quer zu einem Sperrhebel,
- Fig. 4:: eine Schnittansicht durch den Sensor längs des Sperrhebels,
- Fig. 5:: eine zweite Ausführungsform eines Sensors,
- Fig. 6:: eine Explosionsansicht der zweiten Ausführungsform des Sensors,
- Fig. 7:: eine Schnittansicht durch den Sensor quer zu einem Sperrhebel und
- Fig. 8: eine Schnittansicht durch den Sensor längs des Sperrhebels.

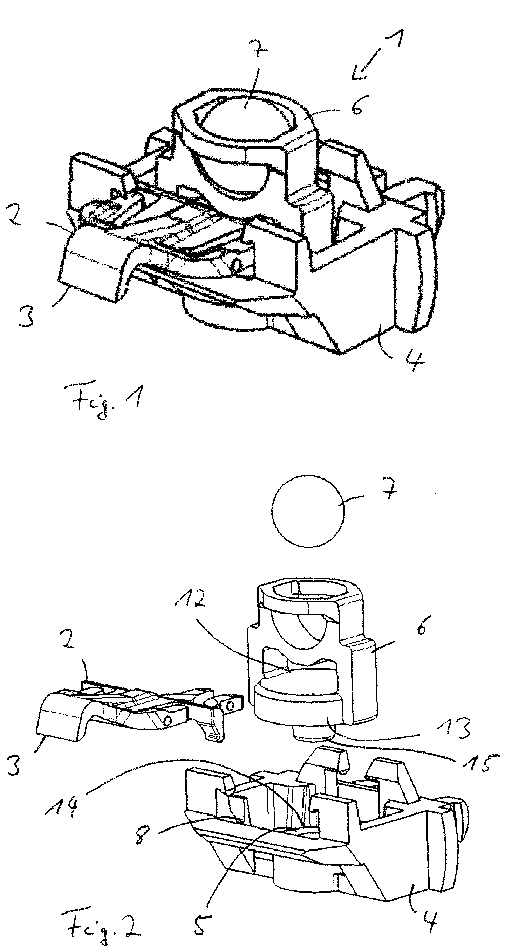

Die Figuren 1 bis 4 zeigen eine erste Ausführungsform eines fahrzeugsensitiven Sensors. Der fahrzeugsensitive Sensor umfasst ein Trägerteil 4, mit dem der Sensor an einen selbstsperrenden Gurtaufroller befestigt werden kann. Der Sensor umfasst ferner einen Sperrhebel 2 mit einer Eingriffsspitze 3, der an Auflagen 8 auf dem Trägerteil 4 aufliegt. Der Sensor umfasst ferner eine Sensormasse 1 aus einem Sensorteil 6 und einem Masseteil 7. In dem ersten Ausführungsbeispiel ist das Masseteil 7 als Kugel ausgeführt und formschlüssig in einer entsprechenden Aufnahme in dem Sensorteil 6 festgelegt.

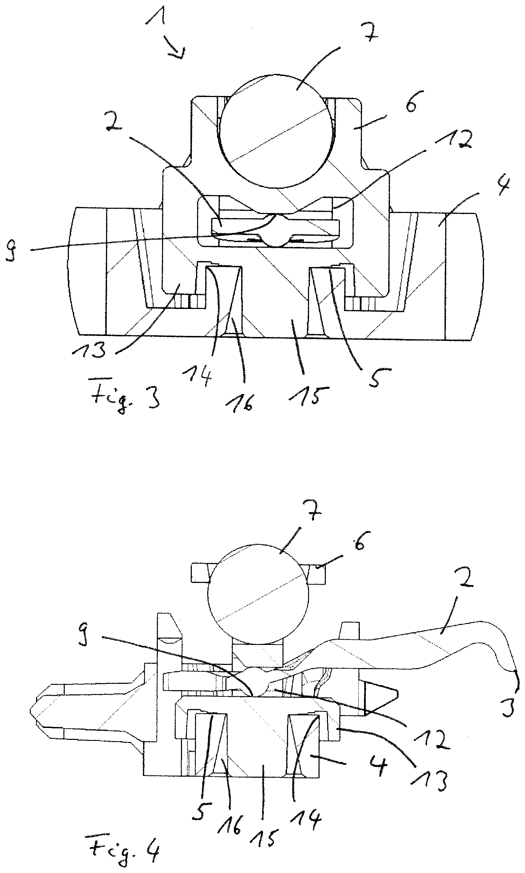

Wie insbesondere aus Fig. 3 und Fig. 4 zu erkennen ist, steht die Sensormasse 1 mit dem Sensorteil 6 auf einer von dem Trägerteil 4 gebildeten Aufstandfläche 5. Das Trägerteil 4 übergreift dabei radial und axial mit einem auskragenden Bereich 13 eine äußere Kante 14 der Aufstandfläche 5. Das Sensorteil 6 weist zudem einen Fortsatz 15 auf, mit dem es in einer konisch zur Aufstandfläche hin zulaufenden Ausnehmung 16 angeordnet ist.

Der auf den Auflagen 8 aufliegende Sperrhebel 2 durchgreift zudem eine fensterartige Ausnahme 12 in dem Sensorteil 6. In diesem durchgreifenden Bereich ist der Sperrhebel 2 in Anlagebereichen 9 auf seiner Unterseite und seiner Oberseite in direktem Kontakt mit dem Sensorteil 6, wobei die Anlagenbereiche 9 kugelförmig ausgebildet sind. Wie insbesondere aus Fig. 4 zu erkennen ist, übergreift das Trägerteil 4 den Sperrhebel 2 einerseits auf einer der Eingriffsspitze 3 zugewandten Seite und andererseits auf der gegenüberliegenden Seite, wodurch der Sperrhebel 2 gegen Herausfallen gesichert ist.

Da das Material des Sensorteils 6 weicher ist als das Material des Masseteils 7 und somit alle Bereiche der Sensormasse 1, die mit anderen Bauteilen in Berührung kommen können, aus einem weichen Material bestehen, können Klappergeräusche verringert werden. Da der auskragende Bereich 13 des Sensorteils 6 die äußere Kante 14 der Aufstandfläche 5 übergreift, wird zudem eine die Kippbewegung der Sensormasse 1 behindernde Verschmutzung verhindert.

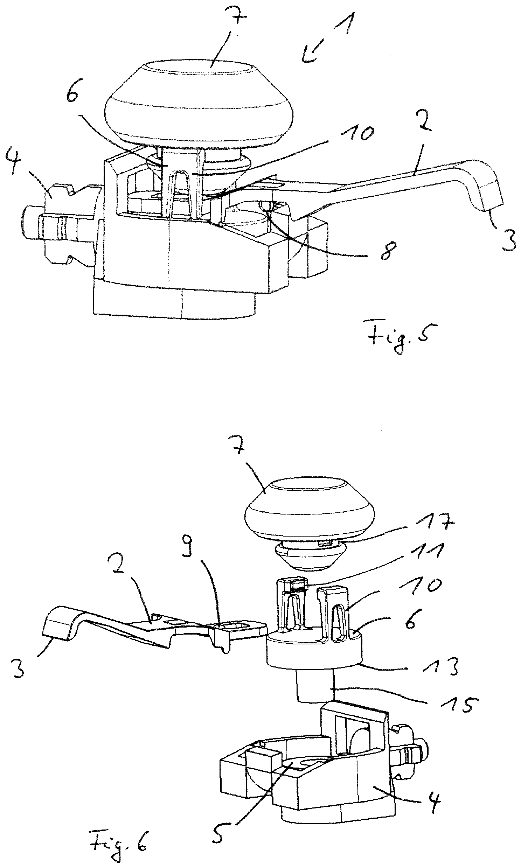

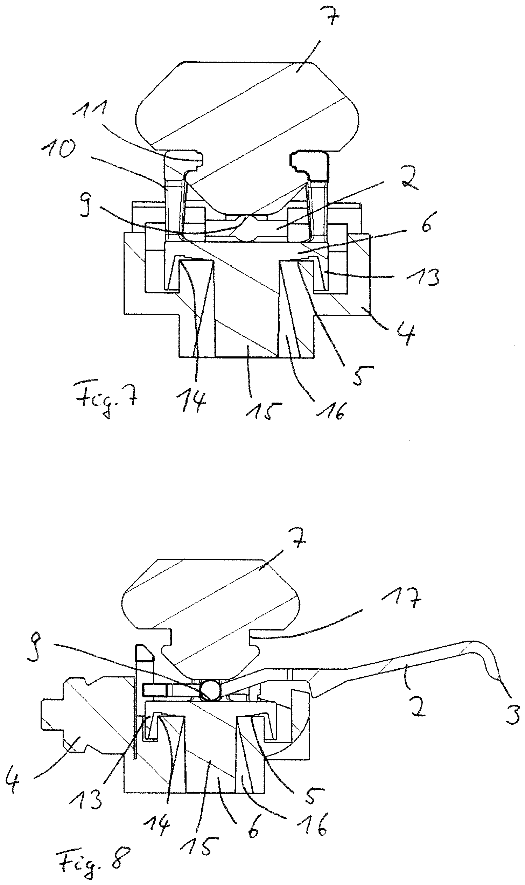

In den Fig. 5 bis 8 ist eine weitere Ausführungsform des fahrzeugsensitiven Sensors dargestellt, wobei im Folgenden nur auf die Unterschiede zu der ersten Ausführungsform eingegangen wird. In der zweiten Ausführungsform besteht die Sensormasse 1 aus einem pilzförmigen Masseteil 7 mit einer umlaufenden Aussparung 17, in die an dem Sensorteil 6 ausgebildete Federarme 10 mit Haken 11 eingreifen. Der die Sensormasse 1 durchgreifende Sperrhebel 2 ist somit auf seiner Oberseite mit dem Masseteil 7 und auf seiner Unterseite mit dem Sensorteil 6 in Anlage und kann während der Montage durch die formschlüssige Verbindung zwischen Masseteil 7 und Sensorteil 6 in seiner Lage fixiert werden.

### Bezugszeichenliste

- 1: Sensormasse
- 2: Sperrhebel
- 3: Eingriffsspitze
- 4: Trägerteil
- 5: Aufstandfläche
- 6: Sensorteil
- 7: Masseteil
- 8: Auflage
- 9: Anlagebereich
- 10: Federarm
- 11: Haken
- 12: Ausnahme
- 13: auskragender Bereich
- 14: äußere Kante
- 15: Fortsatz
- 16: Ausnehmung
- 17: Aussparung

## Patentansprüche

1. Fahrzeugsensitiver Sensor für einen selbstsperrenden Gurtaufroller, umfassend ein Trägerteil (4), einen eine Eingriffsspitze (3) aufweisenden Sperrhebel (2) und eine mit dem Sperrhebel (2) gekoppelte, auf einer Aufstandfläche (5) des Trägerteils (4) stehend angeordnete und zu dem Trägerteil (4) kippbare Sensormasse (1), **dadurch gekennzeichnet, dass** die Sensormasse (1) mit einem auskragenden Bereich (13) eine äußere Kante (14) der Aufstandfläche (5) übergreift, so dass die Aufstandfläche (5) auch radial von der Sensormasse (1) überdeckt ist und somit gegen Verschmutzung geschützt ist.

2. Sensor nach Anspruch 1, wobei die Sensormasse (1) aus einem auf der Aufstandfläche (5) aufliegenden Sensorteil (6) aus einem ersten Material und aus einem mit dem Sensorteil (6) verbundenen, oberhalb der Aufstandfläche (5) angeordneten Masseteil (7) aus einem zweiten Material besteht, wobei das das Sensorteil (6) bildende erste Material eine geringere Dichte und eine geringere Härte als das das Masseteil (7) bildende zweite Material aufweist.

3. Sensor nach Anspruch 1 oder 2, **dadurch gekennzeichnet, dass** der Sperrhebel (2) durch die Sensormasse (1) hindurchgreift und auf einer der Eingriffsspitze (3) gegenüberliegenden Seite von einem Abschnitt des Trägerteils (4) zumindest teilweise übergriffen wird, so dass die Sensormasse (1) gegen Herausfallen gesichert ist.

4. Sensor nach einem der vorhergehenden Ansprüche, wobei der Sperrhebel (2) zur Ausbildung einer Kippachse auf dem Trägerteil (4) aufliegt und das Trägerteil (4) den Sperrhebel (2) im Bereich der Auflage (8) zumindest teilweise übergreift.

5. Sensor nach einem der vorhergehenden Ansprüche, wobei ein durch die Sensormasse (1) durchgreifender Abschnitt des Sperrhebels (2) auf seiner Oberseite und auf seiner Unterseite in Anlage mit der Sensormasse (1) ist und in den Anlagebereichen (9) kugelförmig gestaltet ist.

6. Sensor nach Anspruch 2 und 5, wobei der Sperrhebel (2) mit seinem durchgreifenden Abschnitt zumindest abschnittsweise zwischen dem einteiligen Sensorteil (6) und dem einteiligen Masseteil (7) angeordnet ist.

7. Sensor nach einem der vorhergehenden Ansprüche, wobei an dem Masseteil (7) mindestens eine Aussparung (17) ausgebildet ist, in die an dem Sensorteil (6) ausgebildete Federarme (10) mit Haken (11) an ihren Enden eingreifen.

8. Sensor nach Anspruch 2 und 5, wobei der Sperrhebel (2) das einteilige Sensorteil (6) durch eine fensterartige Ausnahme (12) in dem Sensorteil (6) durchgreift und mit seiner Oberseite und seiner Unterseite in Anlage mit dem Sensorteil (6) ist.

9. Sensor nach einem der Ansprüche 3 bis 8 in Kombination mit Anspruch 2, wobei das Masseteil (7) eine Kugel ist, die in das Sensorteil (6) eingerastet ist.

10. Sensor nach einem der Ansprüche 3 bis in Kombination mit Anspruch 2, wobei das Sensorteil (6) mit einem stiftförmigen Fortsatz (15) in einer konisch zur Aufstandfläche (5) zulaufenden Ausnehmung (16) in dem Trägerteil (4) angeordnet ist.

11. Selbstsperrender Gurtaufroller mit einem einen fahrzeugsensitiven Sensor nach einem der vorhergehenden Ansprüche umfassenden Blockiersystem für eine Gurtaufwickelwelle, wobei im Auslösefall die fahrzeugsensitiv gelagerte Sensormasse (1) den Sperrhebel (2) mit seiner Eingriffsspitze (3) in Eingriff mit einer Verzahnung einer Steuerscheibe bewegt, so dass die Steuerscheibe in ihrer gemeinsamen Drehbewegung mit der Gurtaufwickelwelle angehalten und dadurch das Blockiersystem aktiviert wird.

## Claims

1. Vehicle-sensitive sensor for a self-locking belt retractor, comprising a support part (4), one locking lever (2) having an engagement tip (3), and a sensor mass (1) coupled with the locking lever (2), arranged so that it stands on a contact surface (5) of the support part (4) and that can be tilted towards the support part (4), **characterized in that** the sensor mass (1) overlaps an outer edge (14) of the contact surface (5) with a projecting portion (13), so that the contact surface (5) is also covered radially by the sensor mass (1) and is thus protected from dirt.

2. Sensor according to claim 1, where the sensor mass (1) consists of a sensor part (6) lying on the contact surface (5) and of a mass part (7) made of a second material that is connected to the sensor part (6) and is located above the contact surface (5), where the first material forming the sensor part (6) has a lower density and a lower hardness than the second material forming the mass part (7).

3. Sensor according to claim 1 or 2, **characterized in that** the locking lever (2) grasping through the sensor mass (1) and being at least partially engaged by a section of the support part (4) on a side opposite the engagement tip (3) so that the sensor mass (1) is secured against falling out.

4. Sensor according to one of the preceding claims, where the locking lever (2) rests on the support part (4) so to form a tilting axis and the support part (4) at least partially overlaps the locking lever (2) in the area of the support (8).

5. Sensor according to one of the preceding claims, where a section of the locking lever (2) reaches through the sensor mass (1) on its upper side and is in contact with the sensor mass (1) on its underside and has a spherical shape in the contact areas (9).

6. Sensor according to claim 2 and 5, where the locking lever (2) with its penetrating portion is at least arranged section-wise between the one-piece sensor part (6) and the one-piece mass part (7).

7. Sensor according to one of the preceding claims, where at least one recess (17), wherein spring arms (10) formed on the sensor part (6) engage with hooks (11) at their ends, is formed on the mass part (7).

8. Sensor according to claim 2 and 5, where the locking lever (2) passes through the one-piece sensor part (6) through a window-like opening (12) in the sensor part (6) and is in contact with the sensor part (6) with its upper and lower sides.

9. Sensor according to one of claims 3 to 8, in combination with claim 2 where the mass part (7) is a ball engaged in the sensor part (6).

10. Sensor according to one of claims 3 up to in combination with claim 2, where the sensor part (6) is arranged in the support part (4) with a pin-shaped extension (15) in a recess (16) tapering conically towards the contact surface (5).

11. Self-locking belt retractor with a vehicle-sensitive sensor according to one of the preceding claims, comprising a blocking system for a belt winding shaft, where, when triggered, the vehicle-sensitive sensor mass (1) moves the locking lever (2) with its engagement tip (3) so as to engage with the toothing of a control disk, so that the control disk is stopped in its rotational movement shared with the belt winding shaft, thereby activating the blocking system.

## Revendications

1. Capteur sensible aux mouvements d'un véhicule pour un enrouleur de ceinture autobloquant, comprenant une partie support (4), un levier de blocage (2) présentant une pointe d'accouplement (3), et une masse servant de capteur (1) qui est couplée au levier de blocage (2), est disposée debout sur une surface de contact (5) de la partie support (4) et peut être inclinée par rapport à la partie support (4), **caractérisé en ce que** la masse servant de capteur (1) chevauche une bordure extérieure (14) de la surface de contact (5) avec une zone faisant saillie (13), de sorte que la surface de contact (5) est également recouverte radialement par la masse servant de capteur (1) et est ainsi protégée contre l'encrassement.

2. Capteur selon la revendication 1, dans lequel la masse servant de capteur (1) est constituée d'une partie de capteur (6) en un premier matériau, reposant sur la surface de contact (5), et d'une partie massique (7) en un second matériau, reliée à la partie de capteur (6) et disposée au-dessus de la surface de contact (5), le premier matériau formant la partie de capteur (6) ayant une densité inférieure et une dureté inférieure à celles du second matériau formant la partie massique (7).

3. Capteur selon la revendication 1 ou 2, **caractérisé en ce que** le levier de blocage (2) traverse la masse servant de capteur (1), et est chevauché au moins partiellement par une section de la partie support (4) sur un côté opposé à la pointe d'accouplement (3), de manière à protéger la masse servant de capteur (1) contre toute chute.

4. Capteur selon l'une des revendications précédentes, dans lequel le levier de blocage (2) repose sur la partie support (4) pour former un axe de basculement, et la partie support (4) chevauche au moins partiellement le levier de blocage (2) dans la zone du support (8).

5. Capteur selon l'une des revendications précédentes, dans lequel une section du levier de blocage (2) qui traverse la masse servant de capteur (1) est en appui avec la masse servant de capteur (1) sur sa face supérieure et sur sa face inférieure et se présente sous une forme sphérique dans les zones d'appui (9).

6. Capteur selon la revendication 2 et 5, dans lequel le levier de blocage (2) est disposé, par sa section traversante, au moins par endroits entre la partie de capteur monobloc (6) et la partie massique (7) monobloc.

7. Capteur selon l'une des revendications précédentes, dans lequel au moins un évidement (17) est formé sur la partie massique (7), évidement dans lequel des bras élastiques (10) formés sur la partie de capteur (6) viennent en prise avec des crochets (11) à leurs extrémités.

8. Capteur selon la revendication 2 et 5, dans lequel le levier de blocage (2) traverse la partie de capteur monobloc (6) par un logement en forme de fenêtre (12) dans la partie de capteur (6), et est en contact avec la partie de capteur (6) par sa face supérieure et sa face inférieure.

9. Capteur selon l'une des revendications 3 à 8 en combinaison avec la revendication 2, dans lequel la partie massique (7) est une sphère qui est encliquetée dans la partie de capteur (6).

10. Capteur selon l'une des revendications 3 en combinaison avec la revendication 2, dans lequel la partie de capteur (6) est agencée avec un prolongement (15) en forme de tige dans un évidement (16) dans la partie support (4) qui s'effile coniquement vers la surface de contact (5).

11. Enrouleur de ceinture autobloquant comportant un système de blocage pour un arbre d'enroulement de ceinture comprenant un capteur sensible aux mouvements d'un véhicule selon l'une des revendications précédentes, la masse servant de capteur (1) montée de manière sensible aux mouvements d'un véhicule mettant le levier de blocage (2), au moyen de sa pointe d'accouplement (3), en prise avec une denture d'un disque de commande en cas de déclenchement, de sorte que le disque de commande est stoppé dans son mouvement de rotation commun avec l'arbre d'enroulement de ceinture, activant ainsi le système de blocage.
